# EUROPÄISCHE PATENTSCHRIFT

(11) **EP 0 563 823 B1**
(45) Veröffentlichungstag und Bekanntmachung des Hinweises auf die Patenterteilung: **10.01.1996**
(21) Anmeldenummer: 93105032.2
(22) Anmeldetag: 26.03.1993
(51) Int. Cl.: G01S 3/78

(54) **Infrarotsensor für einen Erdsatelliten**
Infrared sensor for an earth satellite
Détecteur infrarouge pour un satellite terrestre

(30) Priorität: 02.04.1992 DE 4210929
(43) Veröffentlichungstag der Anmeldung: 06.10.1993
(73) Patentinhaber: Daimler-Benz Aerospace Aktiengesellschaft, D-81663 München (DE)
(72) Erfinder: Ziegler, Fred, W-8028 Taufkirchen (DE)

(56) Entgegenhaltungen:
- FR-A- 2 566 143
- GB-A- 2 142 498
- CONFERENCE PROCEEDINGS: VLSI AND COMPUTER PERIPHERALS 12. Mai 1989 , HAMBURG,DE Seiten 3.68 - 3.73 XP44153 KÖNIGER 'SENSORS FOR SPACE APPLICATIONS'

## Beschreibung

Ein Infrarotsensor ist vornehmlich zum Einsatz in geostationären Erdsatelliten, z.B. Fernsehsatelliten gedacht. Er erfaßt die von der Erde ausgehende Infrarotstrahlung im Spektralbereich zwischen 14 µm und 16 µm. Die Erde wird hierbei mit Hilfe einer Eingangsoptik in einer Bildebene abgebildet, wobei die Infrarotstrahlung mit Hilfe einer in der Bildebene bzw. in unmittelbarer Nähe der Bildebene gelegenen Zerhackerscheibe mit einer bestimmten Frequenz zerhackt wird. Die Zerhackerscheibe hat einen Durchmesser derart, daß sie in Ruhestellung und bei exakter Ausrichtung des Erdsatelliten das Bild der Erde vollständig abdeckt. Beim Hin- und Herschwingen der Zerhackerscheibe wird abwechselnd Strahlung vom "linken" und "rechten" Erdrand zum Infrarotdetektor hindurchgelassen, wobei diese Strahlung mit Hilfe einer hinter der Zerhackerscheibe angeordneten Sammeloptik auf den Infrarotdetektor gelenkt wird. Das Ausgangssignal des Infrarotsensors ist ein Wechselsignal und wird mit Hilfe einer Auswerteschaltung bearbeitet. Damit kann die Ablage einer Satellitenachse von der Sollausrichtung auf den Erdmittelpunkt bestimmt werden; vgl. etwa die DE-PS 34 22 004 und die DE-PS 33 22 750.

Die von der Erde ausgehende Infrarotstrahlung ist eine thermische Strahlung, die aufgrund der Temperatur der Erdoberfläche bzw. der Erdatmosphäre ausgesendet wird. Dabei kann die Erde näherungsweise als schwarzer Körper betrachtet und ihre Stnahlungsleistung mit Hilfe der Planck'schen Strahlungsgleichung errechnet werden. Im angegebenen Spektralbereich zwischen 14 und 16 um ist für den Infrarotsensor das in der Erdatmosphäre in großer Höhe von etwa 30 km befindliche Kohlendioxid als Strahlungsquelle sichtbar. Von tieferen Atmosphärenschichten oder von der Erdoberfläche ausgehende Infrarotstrahlung in dem angegebenen Wellenlängenbereich ist vom Weltraum aus nicht sichtbar, da diese Strahlung durch die Kohlendioxidschichten absorbiert wird.

Die Temperatur der vom Infrarotsensor des Erdsatelliten aus sichtbaren Atmosphärenschicht beträgt im Mittel etwa -46° C.

Bei der Auswertung der Ausgangssignale des Infrarotdetektors sind zwei Fehlerquellen zu berücksichtigen.:
1. Die gegenüberliegenden Erdränder liegen nicht immer auf gleicher Temperatur, so daß eine Fehlablage des Satelliten ermittelt wird, obwohl er sich in Sollausrichtung befindet;
2. Im Spektralbereich zwischen 14 und 16 um emittiert auch der Infrarotsensor selbst sehr viel "Eigenstrahlung", was leicht verständlich ist, da er sich ungefähr auf Zimmertemperatur befindet. Die Eigenstrahlung geht hierbei von dem Gehäuse, von den Objektivfassungen etc. aus.

Für das erste Problem sind aus den oben angegebenen Patentschriften 34 22 004 bzw. 33 22 750 zufriedenstellende Lösungen bekannt. Dabei werden die Detektorausgangssignale mit der einfachen und der doppelten Zerhackerfrequenz synchron demoduliert und die Zerhackeramplitude variiert. Aus den derart modulierten Ausgangssignalen kann die Sollausrichtung des Erdsatelliten auch bei unterschiedlicher Temperatur der gegenüberliegenden Erdränder bestimmt werden. Bei diesen kombinierten mechanisch/elektronischen Lösungen werden jedoch Fehler nicht berücksichtigt, die durch die Eigenstrahlung des Sensors ausgelöst werden.

Aus der DE-PS 37 16 358 ist ein Infrarotdetektor bekannt, der in Wärmebildgeräten verwendet wird. Der Detektor ist gemeinsam mit mehreren Blenden in einem doppelwandigen Kühlgefäß gelegen, um Störstrahlung aus der Umgebung zu minimieren. Um auch noch die Eigenstrahlung des Sensors von der Wandung des Gehäuses und der Linsenfassungen etc. zu reduzieren, wird die Strahleneintrittsöffnung des IR-Detektors mit einer Optik, vorzugsweise einem sphärischen Lochspiegel, in sich selbst abgebildet. Diese einfache Idee kann jedoch für Infrarotsensoren von Erdsatelliten so nicht übernommen werden: Wie oben erwähnt, befinden sich Infrarotsensoren in Erdsatelliten trotz der niedrigen Umgebungstemperatur im Weltraum auf etwa Zimmertemperatur und sind nicht durch ein abschirmendes Kühlgefäß vor Störeinflüssen geschützt.

Conference Proceedings : VLSI and Computer Peripherals, 12 mai 1989, Hamburg, DE, Seiten 3-68 bis 3-73; königes : "Sensors for Space Applications", offenbart einen Infrarotsensor, der ein Germaniumobjektiv enthält. Das Objektif bildet die Erde auf eine kreisrunde Zerhackerscheibe ab. Unmittelbar hinter der schwingenden Zerhackerscheibe sind zu beiden Seiten Blenden, die das Feld der hindurchgelassenen Infrarotstrahlung begrenzen, welche Strahlung auf eine Sammeloptik fällt, die sie auf einen Infrarotdetektor lenkt.

Der Erfindung liegt die Aufgabe zugrunde, für Infrarotsensoren von Erdsatelliten eine Ausführung anzugeben, mit der die Störeinflüsse der erwähnten Eigenstrahlung eliminiert werden.

Diese Aufgabe ist gemäß der Erfindung durch die im kennzeichnenden Teil des Patentanspruches 1 angegebenen Merkmale gelöst.

Demgemäß können die Einflüsse der Eigenstrahlung durch eine exakte mechanische Justierung der Sammeloptik und des IR-Detektors relativ zueinander und zum Gehäuse eliminiert werden. Hiermit gelingt es, die "Meßstrahlung" von der erwähnten Eigenstrahlung zu trennen bzw. die Wirkung der Eigenstrahlung so einzustellen, daß sie sich bei der Messung kompensiert.

Zusätzlich zu den Verstelleinrichtungen für die Sammeloptik und den Infrarotdetektor sind in unmittelbarer Nähe der Bildebene zu beiden Seiten der Zerhackerscheibe bzw. der Sammeloptik Blenden vorgesehen, die die Eingangsapertur der Sammeloptik bestimmen. Die Blendenöffnungen werden gemäß der Erfindung trapezförmig gestaltet, so daß dadurch und durch Verschieben der Blenden die Eingangsapertur für die Sammeloptik verändert werden kann. Hierdurch gelingt es, daß die Zerhackerscheibe unabhängig von ihrer Stellung dem Infrarotdetektor gleich hell erscheint, so daß das Ausgangssignal des Infrarotdetektors keine Störsignale oder zumindest stark reduzierte Störsignale aufweist.

Die Erfindung ist an einem Ausführungsbeispiel anhand der Zeichnung näher erläutert. In dieser stellen dar:
- Fig. 1: eine schematische, teilweise geschnittene Aufsicht auf einen Infrarotsensor für einen Erdsatelliten mit einer Zerhackerscheibe, einer Sammeloptik und einem Infrarotdetektor sowie mit Verstelleinrichtungen gemäß der Erfindung zum Verschieben von Sammeloptik und Infrarotdetektor;
- Fig. 2: eine schematische Ansicht einer Blendenanordnung für die Zerhackerscheibe;
- Fig. 3: eine schematische Ansicht einer Blende mit einer zugeordneten Verstelleinrichtung.

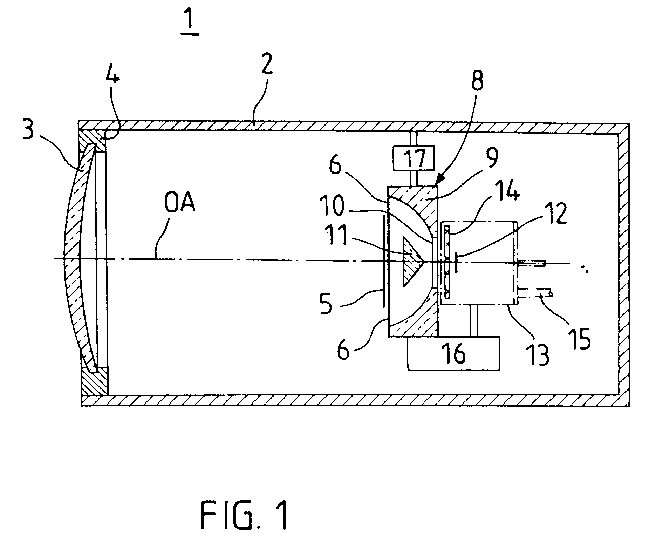

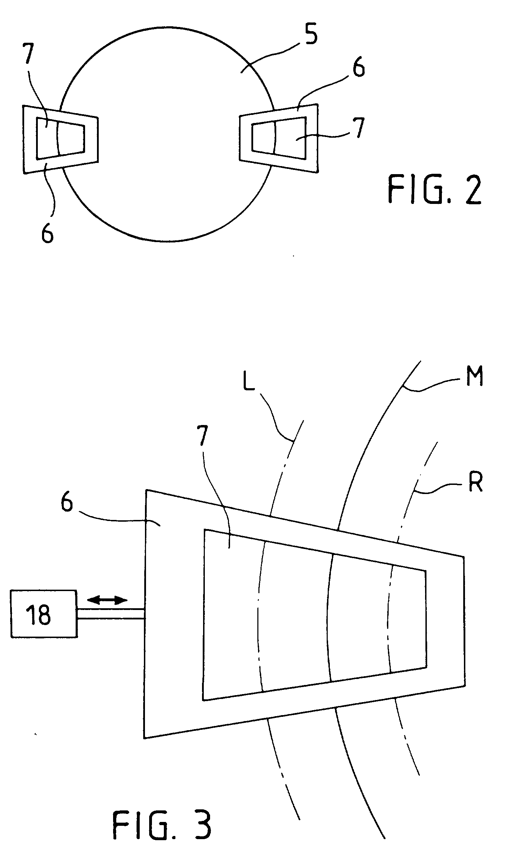

Der in Fig. 1 dargestellte Infrarotsensor 1 weist ein Gehäuse 2 auf, an dessen Stirnseite ein Germaniumobjektiv 3 in einer Linsenfassung 4 gelegen ist. Das Objektiv 3 bildet die Erde auf eine kreisrunde Zerhackerscheibe 5 ab, die mit einer Frequenz von 40 Hz schwingt. Der Antriebsmechanismus für die Zerhackerscheibe 5 sowie deren Halterungen sind hier nicht gezeigt. Ist der Erdsatellit in Sollausrichtung, so gibt die Zerhackerscheibe 5 abwechselnd den linken bzw. den rechten Erdrand frei. Unmittelbar hinter der schwingenden Zerhackerscheibe 5 sind zu beiden Seiten Blenden 6 mit jeweils einer trapezförmigen Blendenöffnung 7 (vgl. Fig. 2 und 3) gelegen, die das Feld der jeweils hindurchgelassenen Infrarotstrahlung begrenzen. Diese fällt anschließend auf eine Sammeloptik 8, die aus einem sphärischen Hohlspiegel 9 mit einer Öffnung 10 in der Mitte und einem Dachkantprisma 11 besteht. Sowohl die vom linken bzw. rechten Erdrand herrührende Infrarotstrahlung wird durch die Sammeloptik auf einen Infrarotdetektor 12 gelenkt, der in einem Gehäuse 13 angeordnet ist. Unmittelbar vor dem Infrarotdetektor 12 ist ein Bandpaßfilter 14 gelegen, das im wesentlichen nur die Infrarotstrahlung im Wellenlängenbereich zwischen 14 um und 16 um hindurchläßt. Der Ausgang des Infrarotdetektors wird mit einem hier nicht gezeigten Vorverstärker verbunden, der das Ausangssignal vorverstärkt und über einen Anschluß 15 an eine hier nicht näher dargestellte Auswerteschaltung weiterleitet.

Die Lage von Sammeloptik 8 und Infrarotdetektor 12 mit seinem Gehäuse 13 relativ zueinander kann mit Hilfe einer ersten Verstelleinrichtung 16 variiert werden. Die gemeinsame Lage von Sammeloptik 8 und Infrarotdetektor 12 mit seinem Gehäuse 13 relativ zu dem Gehäuse 2 des Infrarotsensors 1 kann mit Hilfe einer zweiten Verstelleinrichtung 17 variiert werden. Beide Verstelleinrichtungen 16 und 17 sind lediglich sehr schematisch dargestellt, ermöglichen jedoch eine Hin- und Herverstellung der einzelnen Elemente in einer Richtung, die senkrecht zur optischen Achse (OA) in Schwingrichtung der Zerhackerscheibe 5 und damit parallel zur Bildebene des Gemaniumobjektives 3 liegt.

Für die Blenden 6, die die Eingangsapertur der Sammeloptik 8 bestimmen, ist ebenfalls eine in Fig. 3 nur sehr schematisch dargestellte Verstelleinrichtung 18 vorgesehen, mit der die Blenden 6 mit ihren trapezförmigen Öffnungen ebenfalls parallel zur Bildebene des Germaniumobjektives 3 verschoben werden können.

Die Auswerteschaltung für die Ausgangssignale des IR-Detektors 12 ist im wesentlichen so aufgebaut, wie in den beiden obigen Patentschriften 33 22 750 und 34 22 004 beschrieben. Liegt das Bild der Erde mittig auf der Zerhackerscheibe 5, so gibt der Infrarotdetektor 12 ein Ausgangssignal mit einer Frequenz von 80 Hz ab. Liegt das Erdbild weit nach links oder rechts verschoben, so ist die Frequenz des Ausgangssignales 40 Hz, da am rechten bzw. linken Rand der Zerhackerscheibe kein moduliertes Signal auftritt, wenn die Erde außerhalb des Gesichtsfeldes des Infrarotsensors ist. Um unterscheiden zu können, ob das Ausgangssignal vom linken oder vom rechten Erdrand herrührt, mißt man die Phasenlage dieses 40 Hz-Signales relativ zu einem von der Zerhackerscheibe abgeleiteten 40 Hz-Referenzsignal. Das 40 Hz-Signal, das durch die Strahlung vom linken Erdrand erzeugt wird, liegt um 180° phasenverschoben zum Signal, das durch die Strahlung vom rechten Erdrand erzeugt wird. Durch eine Synchrondemodulation kann ein Ablagesignal erzeugt werden, das z.B. bei nach Links verschobenem Erdbild negativ und bei nach rechts verschobenem Erdbild positiv erscheint.

Sind die Temperaturen an den gegenüberliegenden Erdrändern nicht gleich, ist z.B. der linke Erdrand wärmer als der rechte, so emittiert diese Seite mehr Infrarotstrahlung als die andere. Ohne Korrektur würde der Erdsatellit in eine Sollrichtung geregelt werden, die nicht mit der gewünschten, auf den Erdmittelpunkt weisenden Sollrichtung übereinstimmt. Um dies zu vermeiden, wird das Strahlungsverhältnis von linkem zu rechtem Erdrand durch den Infrarotsensor selbst gemessen und das Ausgangssignal des IR-Detektors entsprechend korrigiert. Die Möglichkeit, das Strahlungsverhältnis zu messen, ergibt sich aus der Tatsache, daß bei ungleicher Strahlungsverteilung das vom Infrarotsensor ermittelte Ablagesignal von der Schwingungsamplitude der Zerhackerscheibe abhängt. Mit zunehmender Amplitude steigt bei einer festen Ablage der Betrag des Ablagesignales an. Desgleichen bewirkt ein wachsender Strahlungsunterschied bei fester Amplitude und fester Ablage ebenfalls ein Ansteigen des Betrages des Ablagesignales. Ist andererseits das Strahlungsverhältnis 1, d.h. linker und rechter Erdrand liegen auf gleicher Temperatur, so ist das Ablagesignal bei kleinen Ablagewinkeln von der Amplitude der Zerhackerscheibe unabhängig.

Aus diesem Grunde wird das Ablagesignal für unterschiedliche Amplituden der Zerhackerscheibe bestimmt, was einfach durch ein Wobbeln der Amplitude mit einer Frequenz von z.B. 3,5 Hz geschieht, d.h., die Amplitude der 40 Hz-Schwingung der Zerhackerscheibe wird im Takt einer 3,5 Hz-Schwingung größer und kleiner gesteuert. Das aus dieser Messung aufgrund der Amplitudenmodulation gewonnene sog. Anomalie-Signal wird zur Korrektur des Ablagesignales benützt.

Das bei korrekter Ausrichtung des Erdsatelliten erzeugte Signal mit einer Frequenz von 80 Hz dient zur Ableitung zweier für die Sensorfunktion entscheidend wichtiger Informationen, nämlich zur Erzeugung eines Erdpräsenz-Signales in der Nähe des Nullpunktes des Sensor-Meßbereiches und zur Kompensation des Anomalie-Signales mit steigender Ablage des Erdsatelliten von der Sollausrichtung.

Um den Einfluß der Eigenstrahlung des Infrarotsensors zu ermitteln, wird von folgender Überlegung ausgegangen: Der IR-Detektor im Sensor "sieht" alle IR-Strahlung, die durch die Zerhackercheibe moduliert wird. Unzerhackte IR-Strahlung ist für ihn unsichtbar. Um den Infrarotsensor zu justieren, wird dieser im Labor auf Bedingungen gebracht, die denen im Weltraum, d.h. beim späteren Einsatz ähneln. Im Laborbetrieb liegen im Gesichtsfeld des Infrarotdetektors Teile des Sensorgehäuses 2, das Germaniumobjektiv 3 mit der Linsenfassung 4 und alle Objekte, die durch das Objektiv hindurch im Außenraum gesehen werden. Die IR-Strahlung der Gesamtheit der genannten Objekte wird verglichen mit der Strahlung, die die als schwarzer Körper angenommene Zerhackerscheibe auf den Infrarotdetektor sendet.

Um zunächst die vom Infrarotdetektor erfaßten Eigenstrahlungskontraste möglichst klein zu machen, wird das erwähnte Bandpaßfilter 14 direkt vor den Infrarotdetektor 12 gesetzt, d.h., Eigenstrahlung aus dem Innenraum des Infrarotsensors wird trotz breitbandig empfindlichen IR-Detektors nur schmalbandig gesehen, woraus bereits eine starke Dämpfung des Störsignales resultiert.

Die durch das Germaniumobjektiv 3 im späteren Einsatz gesehenen Objekte sind nur die Erde bzw. der "kalte", also im Infraroten dunkle Weltraum. Die Sensoreigenstrahlung kann im Labor nur ermittelt werden, wenn der Einfluß der im Außenraum befindlichen Objekte eliminiert wird. Aus diesem Grunde wird der Infrarotsensor auf eine im Infraroten dunkle Wand gerichtet, die durch Abkühlen eines "schwarzen" Körpers auf möglichst niedrige Temperatur realisiert wird. Für die Praxis hat sich ein geschwärzter Hohlraum in einem Kupferkörper als vorteilhaft erwiesen, der auf die Temperatur von flüssigem Stickstoff, d.h., auf -196° C, abgekühlt wurde. Der Kupferkörper ist nach vorne mit einer Germaniumscheibe abgeschlossen. Zur Vermeidung von Kondensationsproblemen wurde der Körper evakuiert. Der Sensor wird sehr nahe an die Germaniumscheibe herangebracht und schaut in das Innere des Kupferkörpers hinein. Um den Einfluß von sich in der Germaniumscheibe bzw. dem Germaniumobjektiv des Infrarotsensors spiegelnder Objekte, die ja, da sie sich auf Zimmertemperatur befinden, alle im Infraroten hell erscheinen, so klein wie möglich zu halten, wird die Germaniumscheibe entspiegelt und der Infrarotsensor so nahe wie möglich an diese herangebracht. Da die Germaniumscheibe und das Germaniumobjektiv im hier interessierenden Strahlungsbereich zwischen 14 um und 16 um nicht 100 %ig durchlässig sind, sondern auch einen Teil der auf sie auftreffenden Strahlung absorbieren, emittieren sie ebenfalls eine "Eigenstrahlung". Diese im Gesichtsfeld des Infrarotsensors homogene Strahlung mindert zwar den Kontrast zwischen der Sensoreigenstrahlung und dem schwarzen Körper, stört beim Nullabgleich jedoch nicht.

Bei dieser Simulation wird der Infrarotsensor im allgemeinen ein 40 Hz-Ablagesignal abgeben, da die oben erwähnten Teile des Sensorgehäuses etc., die im "modulierten" Gesichtsfeld des Infrarotdetektors liegen, strahlungsmäßig links und rechts nicht symmetrisch erscheinen.

Um Strahlungssymmetrie herzustellen, wird wie folgt vorgegangen:

Um die Zahl der Freiheitsgrade bei dieser Symmetrisierung einzuengen, wird die Mitte der Zerhackerscheibe von vornherein geometrisch in die Mitte des Sensorgehäuses gestellt, d.h., daß die Mitte der ruhenden Zerhackerscheibe auf dem Mittellot des Germaniumobjektives liegt. Die Sammeloptik 8 und der Infrarotdetektor 12 mit seinem Gehäuse 13 können in dem Sensorgehäuse sehr feinfühlig durch die oben erwähnten Verstelleinrichtungen 16 und 17 parallel zur Ebene der Zerhackerscheibe verstellt werden. Diese Verstelleinrichtungen weisen z.B. mehrere Feingewindeschrauben auf. Die Sammeloptik und der Infrarotdetektor werden mit Hilfe der beiden Verstelleinrichtungen 16 und 17 solange verschoben, bis kein Ablagesignal mit einer Frequenz von 40 Hz mehr vorliegt. Während des Abgleiches wird die Schwingungsamplitude der Zerhackerscheibe moduliert. In allen Fällen der Modulation soll kein 40 Hz-Ablagesignal mehr auftreten. Dies ist möglich, da mit Hilfe der Verstelleinrichtung 16 die Sammeloptik 8 relativ zum Infrarotdetektor, und Sammeloptik und Infrarotdetektor gemeinsam mit Hilfe der zweiten Verstelleinrichtung 17 relativ zum Sensorgehäuse 2 verschoben werden können.

Außer dem erwähnten 40 Hz-Ablagesignal gibt der Infrarotsensor beim Blick in den Weltraum auch ein 80 Hz-Signal ab, dessen Größe und Phasenlage dem 80 Hz-Signal vergleichbar ist, das bei mittig stehender Erde erzielt wird, d.h., dem Präsenzsignal. Die Ursache für dieses Signal ist, daß der Infrarotdetektor 12 über die Sammeloptik 8 die im Infraroten helle Zerhackerscheibe 5 vor der dunklen Eintrittspupille des Germaniumobjektives 3 sieht. Würde das Übertragungsverhalten der Sammeloptik unabhängig von der Amplitude der Zerhackerscheibe, d.h. von deren Stellung senkrecht zur optischen Achse sein und deren IR-Strahlung gleichmäßig auf den IR-Detektor übertragen und wäre zudem der Strahlungskontrast zwischen Zerhackerscheibe und Eintrittspupille des Germaniumobjektives unabhängig von der jeweiligen Stellung der Zerhackerscheibe, so würde beim Hin- und Herschwingen der Zerhackerscheibe kein Detektorsignal entstehen. Bewegt sich nämlich die Zerhackerscheibe z.B. aus der Mittelstellung nach rechts, so nimmt die über die rechte Hälfte der Sammeloptik auf den Infrarotdetektor gesendete Strahlung zu, die über die linke Hälfte gesendete jedoch ab. Sind Zunahme und Abnahme nicht gleich, so entsteht ein 80 Hz-Signal am Ausgang des Infrarotdetektors. Beim realen Einsatz ist dieses 80 Hz-Signal nicht zu vernachlässigen. Ohne Kompensation dieses 80 Hz-Signales würde der Infrarotsensor beim Blick in den Weltraum ständig die Information "mittig stehende Erde" abgeben, auch wenn tatsächlich gar keine Erde vorhanden wäre. Bei mittig stehender Zerhackerscheibe, was in Fig. 3 durch M angedeutet ist, gelangt auf den Infrarotdetektor weniger Strahlung als in der durch R bzw. L in Fig. 3 angedeuten rechten oder linken Extremlage der Zerhackerscheibe. Damit die Zerhackerscheibe unabhängig von ihrer Stellung für den Infrarotdetektor gleich hell erscheint und damit das störende 80 Hz-Signal eliminiert wird, werden die oben erwähnten verschiebbaren Blenden 6 mit den trapezförmigen Blendenöffnungen 7 verwendet. Die Dimensionierung der Blendenöffnungen muß experimentell ermittelt werden. Aus einem umfangreichen Satz derartiger Blenden mit feiner Abstufung der geometrischen Dimensionen der trapezförmigen Blendenöffnungen wird durch Probieren am Testaufbau vor dem gekühlten schwarzen Körper diejenige Blendenform ermittelt, durch die das störende 80 Hz-Signal zu Null gemacht wird. Für eine Feinjustage kann dann noch die Blende mit Hilfe der Verstelleinrichtung 18, z.B. mit Hilfe einer Feingewindeschraube eingestellt werden. Ein durch Überkompensation entstehendes kleines negatives 80 Hz-Signal kann hierbei toleriert werden. Es sollte jedoch nicht positiv sein. Allerdings ergibt ein negatives kleines 80 Hz-Signal eine unnötige Verringerung des Signal-Rauschverhältnisses.

Diese Feinjustage der Blendenstellung ist aus folgendem Grunde notwendig: Wenn die beiden Blenden 6 vor der Sammeloptik 8 befestigt sind, tritt im allgemeinen wiederum ein störendes 40 Hz-Signal auf, und zwar aufgrund der Asymmetrie der beiden Strahlungsanteile, die über den rechten bzw. über den linken Teil der Sammeloptik auf den Infrarotdetektor gelangen. Durch Verschieben einer der Blenden 6 nach innen oder nach außen, was durch den Doppelpfeil in Fig. 3 angedeutet ist, wird die Strahlungsmenge, die durch die Blendenöffnung 7 tritt, verkleinert bzw. vergrößert. Die Verschieberichtung liegt, wie aus Fig. 3 ersichtlich, senkrecht zu den parallelen Trapezseiten.

Bei der Auswahl der Blenden und bei deren Feinjustage muß beachtet werden, daß das durch das Wobbeln der Amplitude der Zerhackerscheiben erzeugte Anomalie-Signal nach der Justage Null bzw. sehr klein sein muß. Gleichzeitig muß jedoch dieses Anomalie-Signal ebenfalls Null oder sehr klein sein, wenn der Sensor mittig auf einen Erdsimulator gerichtet ist, bei dem die gegenüberliegenden Ränder auf gleicher Temperatur liegen. Beide Forderungen für das Anomalie-Signal können durch leichtes Nachjustieren des kompletten Aufbaues aus Sammeloptik und Blenden im Sensorgehäuse oder durch geringfügiges Nachjustieren der Lage des Infrarotdetektors mit Hilfe der Verstelleinrichtungen 16 und 17 mit nachfolgender nochmaliger Überprüfung des Anomalie-Signales erfüllt werden, wenn der Infrarotsensor erneut auf den kalten schwarzen Körper gerichtet wird. Durch iteratives Ausprobieren wird schließlich die Endstellung aller Komponenten gefunden, bei denen die obigen beiden Forderungen erfüllt sind.

Nach diesem relativ komplexen Justageablauf befindet sich der Infrarotsensor idealerweise in einem Zustand, in dem er bei Ausrichtung auf den kalten schwarzen Körper, entsprechend einer Ausrichtung des Infrarotsensors auf den kalten Weltraum, weder ein 80 Hz-Signal entsprechend dem Erdpräsenz-Signal noch ein 40 Hz-Signal entsprechend einem Erdablage-Signal und auch kein Anomalie-Signal beim Wobbeln der Zerhackeramplitude abgibt. Beim Ausrichten auf einen beheizten Erdsimulator mit gleicher Temperatur an gegenüberliegenden Rändern in genau mittiger Stellung, entsprechend einem Blick des Infrarotsensors beim Einsatz auf den Mittelpunkt der Erde mit gleicher Temperatur an beiden Erdrändern, ergibt sich ebenfalls kein Anomalie-Signal beim Wobbeln der Zerhackeramplitude. Das gleichgerichtete 80 Hz-Signal ist dann positiv und hat seinen höchsten Wert, da die Erde "präsent" ist und der Satellit in Sollausrichtung steht. Das durch Synchrondemodulation gleichgerichtete 40 Hz-Signal ist ebenfalls Null und steigt bei einer Fehlausrichtung des Infrarotsensors nach der einen Seite in positiver Richtung, bei einer Fehlausrichtung nach der anderen Seite in negativer Richtung an. Der Infrarotsensor ist jetzt so abgeglichen, daß sich der Einfluß der Eigenstrahlung und des Eigenstrahlungskontrastes der Zerhackerscheibe zum Gehäuse und zum Weltraum kompensiert.

## Patentansprüche

1. Infrarotsensor für einen Erdsatelliten
- mit einem Gehäuse,
- mit einer Eingangsoptik, die die Erde in einer Bildebene abbildet,
- mit einer in der Bildebene der Eingangsoptik gelegenen Zerhackerscheibe, die einen, dem Bild der Erde entsprechenden Durchmesser aufweist und mit vorgegebener Zerhackerfrequenz und Zerhackeramplitude entlang einer Richtung in der Bildebene hin- und herbewegt wird,
- mit einer Sammeloptik, die auf der der Eingangsoptik gegenüberliegenden Seite der Zerhackerscheibe angeordnet ist,
- mit einem Infrarotdetektor, auf den die Sammeloptik die Bildebene der Eingangsoptik abbildet, und
- mit einer Auswerteschaltung zum Ermitteln der Ablage einer Achse des Erdsatelliten von der Sollausrichtung auf die Erde aufgrund der Ausgangssignale des Infrarotdetektors,
**dadurch gekennzeichnet**, daß Verstelleinrichtungen (16,17) zum Verschieben der Sammeloptik (8) und des Infrarotdetektors (12) parallel zur Ebene der Zerhackerscheibe (5) bzw. zur Bildebene der Eingangsoptik (3) vorgesehen sind.

2. Infrarotsensor nach Anspruch 1, **dadurch** **gekennzeichnet,**daß die Verstelleinrichtungen eine erste Verstelleinrichtung (16) zum Verschieben von Sammeloptik (8) und Infrarotdetektor (12) relativ zueinander und eine zweite Verstelleinrichtung (17) zum gemeinsamen Verschieben von Sammeloptik (8) und Infrarotdetektor (12) relativ zum Gehäuse (2) des Infrarotsensors (1) umfassen.

3. Infrarotsensor nach Anspruch 1 oder 2, **dadurch** **gekennzeichnet,** daß zu beiden Seiten der Zerhackerscheibe (5) in einer Ebene parallel zur Zerhackerscheibe verschiebbare Blenden (6) vorgesehen sind, deren die Eingangsapertur der Sammeloptik (8) bestimmenden Blendenöffnungen variierbar sind.

4. Infrarotsensor nach Anspruch 3, **dadurch gekennzeichnet,** daß die Blendenöffnungen (7) trapezförmig sind.

5. Infrarotsensor nach Anspruch 4, **dadurch gekennzeichnet,** daß die Blenden (6) senkrecht zu den parallelen Trapezseiten der Blendenöffnungen (7) mit Hilfe einer Verstelleinrichtung (18) verschiebbar sind.

6. Infrarotsensor nach einem der vorhergehenden Ansprüche, **dadurch gekennzeichnet**, daß direkt vor dem Infrarotdetektor (12) ein schmalbandiger Infrarotfilter (14) angeordnet ist.

## Claims

1. Infrared sensor for an earth satellite
- having a housing,
- having input optics which image the earth in an imaging plane,
- having a chopper disc which is located in the imaging plane of the input optics, has a diameter corresponding to the image of the earth and is moved in a reciprocating manner along a direction in the imaging plane at a predetermined chopper frequency and a chopper amplitude,
- having collecting optics which are arranged on that side of the chopper disc which is opposite the input optics,
- having an infrared detector onto which the collecting optics image the imaging plane of the input optics, and
- having an evaluation circuit for determining the offset of one axis of the earth satellite from the nominal alignment to the earth on the basis of the output signals of the infrared detector,
characterized in that adjusting devices (16, 17) are provided for displacing the collecting optics (8) and the infrared detector (12) parallel to the plane of the chopper disc (5) and to the imaging plane of the input optics (3).

2. Infrared sensor according to Claim 1, characterized in that the adjusting devices comprise a first adjusting device (16) for displacing the collecting optics (8) and the infrared detector (12) relative to one another, and a second adjusting device (17) for jointly displacing the collecting optics (8) and the infrared detector (12) relative to the housing (2) of the infrared sensor (1).

3. Infrared sensor according to Claim 1 or 2, characterized in that displaceable shutters (6) are provided on both sides of the chopper disc (5) in a plane parallel to the chopper disc, the shutter openings, which determine the input aperture of the collecting optics (8), of which shutters (6) are variable.

4. Infrared sensor according to Claim 3, characterized in that the shutter openings (7) are trapezoidal.

5. Infrared sensor according to Claim 4, characterized in that the shutters (6) can be displaced at right angles to the parallel trapezoid sides of the shutter openings (7) with the aid of an adjusting device (18).

6. Infrared sensor according to one of the preceding claims, characterized in that a narrowband infrared filter (14) is arranged directly in front of the infrared detector (12).

## Revendications

1. Détecteur infrarouge pour un satellite terrestre
- avec un boîtier,
- avec un dispositif optique d'entrée qui représente la Terre dans un plan de l'image,
- avec un disque vibreur monté dans le plan de l'image du dispositif optique d'entrée, lequel présente un diamètre correspondant à l'image de la Terre et est déplacé avec un mouvement de va-et-vient le long d'une direction dans le plan de l'image avec une fréquence de vibration et une amplitude de vibration prédéfinies,
- avec un dispositif optique collecteur, lequel est disposé sur le dispositif optique d'entrée sur le côté opposé du disque vibreur,
- avec un détecteur infrarouge sur lequel le dispositif optique collecteur représente le plan de l'image du dispositif optique d'entrée, et
- avec un circuit d'évaluation destiné à déterminer la position d'un axe du satellite terrestre par rapport à l'alignement voulu sur la Terre sur la base du signal de sortie du détecteur infrarouge,
caractérisé par le fait que sont prévus des dispositifs de positionnement (16, 17) destinés à faire coulisser le dispositif optique collecteur (8) et le détecteur infrarouge (12) parallèlement au plan du disque vibreur (5) ou au plan de l'image du dispositif optique d'entrée (3).

2. Détecteur infrarouge conforme à la revendication 1, caractérisé par le fait que les dispositifs de positionnement comprennent un premier dispositif de positionnement (16) destiné à faire coulisser le dispositif optique collecteur (8) et le détecteur infrarouge (12) l'un par rapport à l'autre et un deuxième dispositif de positionnement (17) destiné à faire coulisser ensemble le dispositif optique collecteur (8) et le détecteur infrarouge (12) par rapport au boîtier (2) du détecteur infrarouge (1).

3. Détecteur infrarouge conforme à la revendication 1 ou 2, caractérisé par le fait que des obturateurs coulissants (6) sont prévus des deux côtés du disque vibreur (5) dans un plan parallèle au disque vibreur, lesquels font varier les orifices d'obturation définissant l'ouverture d'entrée du dispositif optique collecteur (8).

4. Détecteur à infrarouge conforme à la revendication 3, caractérisé par le fait que les ouvertures d'obturation (7) sont de forme trapézoïdale.

5. Détecteur à infrarouge conforme à la revendication 4, caractérisé par le fait que les obturateurs (6) peuvent être coulissés perpendiculairement par rapport aux côtés trapézoïdaux en parallèle des orifices d'obturation (7) à l'aide d'un dispositif de positionnement (18).

6. Détecteur à infrarouge conforme à l'une des revendications précédentes, caractérisé par le fait qu'un filtre à infrarouge (14) à bande étroite est disposé directement avant le détecteur infrarouge (12).
